# EUROPÄISCHE PATENTANMELDUNG

(11) **EP 4 304 055 A1**
(43) Veröffentlichungstag der Anmeldung: **10.01.2024**
(21) Anmeldenummer: 22182975.7
(22) Anmeldetag: 05.07.2022
(51) Int. Cl.: H02K 3/04, H02K 11/33, H02K 9/22

(54) **ELEKTROMOTOR**

(71) Anmelder: Siemens Aktiengesellschaft, 80333 München (DE)
(72) Erfinder: Brütting, Frank, 91054 Erlangen (DE)
(74) Vertreter: Siemens Patent Attorneys

(57) **Zusammenfassung**

Ein Elektromotor mit ständerseitigen Stabwicklungen umfasst eine Mehrzahl von Wechselrichtern zur Ansteuerung der Stäbe, wobei die Leistungsteile der Wechselrichter auf einer oder mehreren Leiterplatten angeordnet sind, die Leiterplatten wenigstens zwei axial zueinander verschobene kreis- oder ringförmige Strukturen ausbilden, wobei die Platinen mittels Verbindungsplatinen elektrisch verbunden sind, wobei die Verbindungsplatinen sich axial erstrecken und auf die Platinen der kreis- oder ringförmigen Strukturen an deren äußerem Umfang oder Innenkreis aufgesteckt sind.

## Beschreibung

Die Erfindung betrifft einen Elektromotor mit einer ständerseitigen Stabwicklung.

Elektromotoren können ständerseitig eine Stabwicklung aufweisen. Dabei weist der Ständer (Stator) eine Reihe von Stäben anstelle von gewickelten Drahtleitern als Feldleiter auf. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich.

Dieser hohe Stromfluss erfordert nur eine vergleichsweise geringe Spannung von beispielsweise 12 V. Die geringe Spannung ermöglicht es, die Komponenten der Wechselrichter, mit denen die Stäbe angesteuert werden, in geringen Abständen zueinander anzuordnen. So können die Komponenten der Leistungselektronik beispielsweise auf einer oder mehr Platinen angeordnet werden, die nahe am Elektromotor angeordnet werden.

Besonders vorteilhaft ist, dass ein solcher Elektromotor in kompakter Weise so gestaltet werden kann, dass jeder der Feldleiter von eigenen Leistungsteilen angesteuert wird und somit jeder Feldleiter mit einer eigenen Phase angesteuert werden kann. So können Elektromotoren mit 48, 72 oder auch 120 Feldleitern und Phasen kompakt aufgebaut werden.

Problematisch ist dabei, dass die große Zahl von Leistungsteilen mit einer zentralen Steuerung verbunden werden muss. Kabelverbindungen zwischen einer zentralen Steuerung und einer Vielzahl von Leistungsteilen ergeben nachteilig einen sehr komplexen Aufbau.

Es ist Aufgabe der Erfindung, einen Elektromotor anzugeben, der den eingangs genannten Nachteil behebt, insbesondere eine effiziente Verbindung zwischen Steuerung und Leistungsteilen aufweist.

Diese Aufgabe wird durch einen Elektromotor mit den in Anspruch 1 angegebenen Merkmalen gelöst.

Der erfindungsgemäße Elektromotor umfasst einen Stator mit einer Mehrzahl von als Stab ausgestalteten Feldleitern. Weiterhin umfasst der Elektromotor einen Wechselrichter mit einem oder mehreren parallelen Leistungsteilen für jeden der Feldleiter zu deren Ansteuerung, wobei der Wechselrichter eine Steuerung zur Erzeugung von Ansteuersignalen für die Leistungsteile umfasst.

Dabei sind die Endstufen des Wechselrichters auf einer Mehrzahl von Leiterplatten angeordnet. Die Leiterplatten wiederum sind so angeordnet, dass sie wenigstens zwei kreis- oder ringförmige Strukturen ausbilden. Die kreis- oder ringförmigen Strukturen sind parallel zueinander und axial versetzt zueinander angeordnet, sodass ihre Mittelpunkte auf einer gemeinsamen Zentral-Achse liegen.

An jeder der Leiterplatten sind ein oder mehrere Steckverbinder angeordnet zur Kontaktierung der Endstufen. Eine Verbindungsplatine ist an bezüglich der Zentral-Achse azimutal gleichliegende Steckverbinder von Leiterplatten verschiedener kreis- oder ringförmiger Strukturen angesteckt.

Parallel bezeichnet in Bezug auf die kreis- oder ringförmigen Strukturen, dass deren Kreis- oder Ring-Ebenen parallel sind oder mathematisch anders ausgerückt, dass ihre FlächenNormalen dieselbe Richtung aufweisen.

Axial versetzt bedeutet in Bezug auf die kreis- oder ringförmigen Strukturen, dass diese (ausschließlich) entlang einer übereinstimmenden Achse zueinander verschoben sind, wobei diese Achse der Zentral-Achse entspricht, also der Flächennormalen durch den Kreis- oder Ringmittelpunkt.

Da die kreis- oder ringförmigen Strukturen aus einer Mehrzahl von Leiterplatten aufgebaut sind, versteht es sich, dass sie nicht geometrisch exakt sind und die Kreis- oder Ringfläche auch nicht vollständig gefüllt sein muss. Vielmehr verbleiben Lücken zwischen den Leiterplatten.

Legt man in jede der kreis- oder ringförmigen Strukturen Polarkoordinaten, dann bezeichnet azimutal den Winkel in diesen Polarkoordinaten. Azimutal gleichliegende Steckverbinder liegen also in derselben Richtung von der Zentral-Achse aus. Solche Steckverbinder verschiedener kreis- oder ringförmiger Strukturen bilden also eine Linie, die parallel zur Zentral-Achse liegt.

Die Steckverbinder können beispielsweise Federkontakte sein oder direkte Platinen-Steckverbinder. Es kann sich dabei um eine Buchse oder einen (Einbau-)Stecker handeln, wobei die entsprechende Gegenseite an der Verbindungsplatine angeordnet ist.

Unter Endstufe werden im Rahmen dieses Textes im Wesentlichen die Leistungshalbleiterschalter verstanden, die zu einem Wechselspannungsausgang eines Leistungsteils gehören. Da die zu den Leistungshalbleiterschaltern gehörigen Gate-Treiber-Schaltungen in einigen Ausgestaltungen der Erfindung örtlich von den Leistungshalbleiterschaltern getrennt sind, werden diese nicht zur Endstufe gezählt. Unter Leistungsteil werden die Leistungshalbleiterschalter zusammen mit ihren jeweiligen Gate-Treiber-Schaltungen verstanden. Die Gesamtheit aus Leistungsteilen und Steuerung wird als Wechselrichter bezeichnet.

Vorteilhaft wird durch die Erfindung eine besonders einfache Art der Kontaktierung der elektronischen Bauelemente auf den Leiterplatten erreicht, bei der eine Vielzahl von Kabeln zwischen der Steuerung und den Leiterplatten (wenigstens eines pro azimutal gleichliegender Leiterplatte) durch eine einzelne Verbindungsplatine pro Phase oder sogar eine Verbindungsplatine für mehrere Phasen ersetzt wird. Sind bei diesem Typ von Elektromotor beispielsweise sechs Leiterplatten für eine Phase parallelgeschaltet, dann reicht eine Verbindungsplatine mit einem einzigen Kabel zur Steuerung zur Kontaktierung aller sechs Leiterplatten aus.

Es ist zweckmäßig, wenn für alle Steckverbinder eine Verbindungsplatine vorhanden ist. Beispielsweise können die Steckverbinder azimutal am Außen- oder Innenrand jeder ringförmigen Struktur verteilt sein. Dann ist für jede azimutale Position eine Verbindungsplatine vorhanden. Diese bilden dann eine Form, die einem lückenhaften Zylindermantel entspricht.

Weiterhin ist es zweckmäßig, wenn jede Verbindungsplatine jeweils mit allen azimutal gleichliegenden Steckverbindern verbunden ist. Sind also vier kreis- oder ringförmige Strukturen vorhanden, dann haben bevorzugt alle der kreis- oder ringförmigen Strukturen einen Steckverbinder an denselben azimutalen Positionen und jede Verbindungsplatine kontaktiert alle Steckverbinder, die an einer azimutalen Position liegen, also eine Linie parallel zur Zentral-Achse ausbilden.

Die Verbindungsplatinen stellen vorteilhaft eine indirekte Verbindung zwischen der Steuerung einerseits und den Endstufen, also den Leistungshalbleiterschaltern, auf den Leiterplatten andererseits her. Indirekt bedeutet dabei, dass inmitten dieser Verbindung die Gate-Treiber-Schaltungen für die Leistungshalbleiterschaltern liegen, unabhängig davon, wo diese physisch angeordnet sind. Die Gate-Treiber-Schaltungen können auf verschiedene Weise angeordnet sein.

Vorteilhafte Ausgestaltungen des erfindungsgemäßen Elektromotors gehen aus den abhängigen Ansprüchen hervor. Dabei kann die Ausführungsform der unabhängigen Ansprüche mit den Merkmalen eines der Unteransprüche oder mit denen aus mehreren Unteransprüchen kombiniert werden. Demgemäß können noch zusätzlich folgende Merkmale vorgesehen werden:
Die Zentral-Achse der kreis- oder ringförmigen Strukturen kann der Motorachse entsprechen. Das bedeutet mit anderen Worten, dass das Zentrum jeder kreis- oder ringförmigen Struktur auf der Motorachse liegt und dass jede der kreis- oder ringförmigen Strukturen senkrecht zur Motorachse angeordnet ist.

Bei dieser Form der Anordnung der kreis- oder ringförmigen Strukturen durchdringen die Feldleiter oder sie fortsetzende Stromleiter bei geradliniger Fortsetzung die kreis- oder ringförmigen Strukturen in einer drehsymmetrischen Weise. Dadurch ergibt sich ein gut modularisierbarer Aufbau, bei dem gleichartige Platinen verwendet werden können und bei dem die Kontaktierung eines jeweiligen Feldleiters besonders einfach ist.

Weiterhin können die Feldleiter oder sie fortsetzende Stromleiter sogar als mechanischer Träger für die Platinen fungieren, wodurch der Aufbau weiter vereinfacht wird.

Die kreis- oder ringförmigen Strukturen können denselben Durchmesser aufweisen. Diese Ausgestaltung ist zweckmäßig, da dadurch die Federkontakte bei gleichartiger Anbringung an den Platinen eine in axialer Richtung verlaufende Linie ausbilden können. Dadurch wird eine einfache Installation der Verbindungsplatinen ermöglicht.

Die Verbindungsplatinen erstrecken sich bevorzugt in axialer Richtung parallel zur Motorachse. Dabei bezieht sich das Erstrecken auf die Orientierung der längsten Kante der bevorzugt rechteckigen Verbindungsplatinen.

Die Anzahl der Verbindungsplatinen kann der Anzahl der Feldleiter entsprechen. Bei dieser Ausgestaltung wird also eine Verbindungsplatine pro Phase des Elektromotors verwendet. Dadurch wird der Aufbau der Verbindungsplatine vereinfacht und der Verdrahtungsaufwand auf der Platine verringert.

In alternativen Ausgestaltungen kann auch eine Anzahl von Verbindungsplatinen verwendet werden, die geringer ist als die Anzahl der Feldleiter. Beispielsweise können auf einer Platine die Leistungsteile für zwei, drei oder mehr der Phasen, also der Feldleiter angeordnet sein und die Platine so ausgestaltet sein, dass eine Verbindung der Leistungsteile zur Steuerung mit einer einzelnen Verbindungsplatine erreicht wird. In diesem Fall entspricht die Anzahl der Verbindungsplatinen der Anzahl der Feldleiter oder Phasen geteilt durch die Anzahl der Leistungsteile pro Platine.

Diese Ausgestaltung des Elektromotors ist besonders vorteilhaft, wenn eine hohe Anzahl an Feldleitern, beispielsweise 48, 72 oder gar 120 verwendet wird. Bei solchen Elektromotoren ist es vorteilhaft, die Anzahl an Platinen und Verbindungsplatinen gegenüber der einfacheren Variante mit einer Verbindungsplatine pro Phase zu verringern.

Die Verbindungsplatine kann Gate-Treiber-Schaltungen für die Leistungsteile umfassen. Dadurch wird erreicht, dass die Gate-Treiber-Schaltungen nicht mehr eigenen Platz auf den Platinen beanspruchen. Für die Leistungsteile bleibt entsprechend mehr Platz auf den Platinen, was das Design der Platinen vereinfacht. Weiterhin wird auch anfallende Abwärme der Gate-Treiber-Schaltungen von den Platinen entfernt und somit die Entwärmung vereinfacht.

Weiterhin kann die Verbindungsplatine auch einen oder mehrere lokale Steuerchips umfassen, die Steuerungsaufgaben, beispielsweise eine Strommessung für eine jeweilige Endstufe übernehmen. Die lokalen Steuerchips sind jeweils einer oder mehreren Gate-Treiber-Schaltungen zugeordnet und mit dieser oder diesen verbunden.

Alternativ können die Gate-Treiber-Schaltungen auf den Platinen selbst zusammen mit den jeweiligen Leistungshalbleiterschaltern angeordnet sein. Dadurch werden die Verbindungsplatinen einfacher im Aufbau, da sie lediglich eine Verbindung zwischen der Steuerung und den Platinen und damit den Gate-Treiber-Schaltungen herstellen müssen, jedoch weiterhin zusätzliche Schaltkreise wie z.B. Überwachungs-, Ansteuer-, Verstärker/Pufferschaltungen oder Kommunikationsschnittstellen enthalten können. Hierfür können die Verbindungsplatinen vorteilhaft einen Multiplexer umfassen.

In einer weiteren Alternative können die Gate-Treiber-Schaltungen auch auf eigenen Treiber-Platinen angeordnet sein. Diese werden bevorzugt auf die Platinen mit den Leistungshalbleiterschaltern aufgesteckt, wobei die Anordnung der Platinen in diesem Fall sandwichartig ist, d.h. die Treiber-Platinen überdecken die Platinen wenigstens teilweise. In diesem Fall können die Verbindungsplatinen an den Treiber-Platinen, an den Endstufen-Platinen oder an beiden angesteckt sein, d.h. mit einer oder beiden der Platinentypen eine Verbindung aufweisen, über die Signale übertragen werden.

Jede Phase, die auf einer Platine angesteuert wird, weist dazu eine Halbbrücke auf, die aus zwei logischen Schaltern aufgebaut ist. Ein logischer Schalter kann dabei genau einen einzelnen Leistungshalbleiterschalter umfassen. Um das Schalten höherer Ströme zu erlauben, kann ein logischer Schalter aber auch eine Mehrzahl von Leistungshalbleiterschaltern umfassen, beispielsweise zwei, drei, fünf oder noch mehr Leistungshalbleiterschalter, die parallel geschaltet sind.

Eine Gate-Treiber-Schaltung ist bevorzugt so gestaltet, dass sie die Steuer-Anschlüsse (beispielsweise Gate-Anschlüsse) der beiden logischen Schalter der Halbbrücke ansteuert, d.h. mit Strom/Spannung in der Weise versorgt, dass die von der Steuerung geforderten Schalthandlungen stattfinden und die Schalter in einer von der Steuerung geforderten Weise eingeschaltet und ausgeschaltet sind.

Umfassen die logischen Schalter der Halbbrücke jeweils mehr als einen parallelen Leistungshalbleiterschalter, dann kann die Gate-Treiber-Schaltung ausgestaltet sein, alle der Leistungshalbleiterschalter anzusteuern. Es ist aber auch möglich, mehr als eine Gate-Treiber-Schaltung für die Ansteuerung vorzusehen. Beispielsweise kann die Anzahl der Gate-Treiber-Schaltungen genau der Anzahl der parallelen Leistungshalbleiterschalter entsprechen. Umfasst die Halbbrücke also fünf Highside-MOSFETs und fünf Lowside-MOSFETs, können dafür bis zu zehn Gate-Treiber-Schaltungen vorhanden sein. In diesem Fall ist es aus Platzgründen vorteilhaft, die Gate-Treiber-Schaltungen auf der Treiber-Platine oder auf der Verbindungsplatine anzuordnen.

Die Verbindungsplatine kann einen Multiplexer umfassen und derart ausgestaltet sein, dass ein von der Steuerung auf einer ersten Signalleitung eingehendes Steuersignal für ein erstes Leistungsteil mit dem Multiplexer auf eine von mehreren zweiten Signalleitungen geleitet wird, die mit dem ersten Leistungsteil über einen Federkontakt verbunden ist.

Durch den Multiplexer auf der Verbindungsplatine wird erreicht, dass die Steuerung nur mit einer einzelnen Signalleitung an die Verbindungsplatine angeschlossen sein muss, was den Aufbau vereinfacht. Das ist besonders vorteilhaft, wenn die Verbindungsplatine mehrere Leistungsteile auf einer einzelnen Platine sowie eine Mehrzahl von parallel geschalteten Leistungsteilen mit der Steuerung verbindet, da in diesem Fall ohne den Multiplexer eine große Anzahl paralleler Steuerleitungen von der Steuerung zur Verbindungsplatine nötig wären. Die einzelne Signalleitung kann dabei eine direkte elektrische Leitung sein oder aber auch eine nach einem Kommunikations-Standard arbeitende Verbindung wie beispielsweise eine optische Verbindung, USB-Verbindung oder eine LAN-Verbindung.

Die Verbindungsplatine kann eine oder mehrere Verschraubungen mit einer oder mehreren der kreis- oder ringförmigen Strukturen umfassen. Durch Verschraubungen wird verhindert, dass sich die Verbindungsplatine durch Vibrationen und andere äußere Umstände löst.

Die Verbindungsplatine kann geknickt sein, beispielsweise in tangentialer Richtung. Die Verbindungsplatine hat in diesem Fall die Form eines flachen Satteldachs, dessen First sich axial erstreckt. Eine komplexere Form ergibt sich, wenn die Verbindungsplatine mehrere, bevorzugt parallele, Knicklinien aufweist. Eine solche Verbindungsplatine ist geeignet, die Steckverbinder mehrerer nebeneinander angeordneter Leiterplatten von mehreren kreis- oder ringförmigen Strukturen zu kontaktieren, auch wenn diese Steckverbinder nicht mehr in einer Ebene liegen und radial ausgerichtet sind, d.h. auch nicht parallel zueinander orientiert sind, sondern relativ zueinander geneigt sind. Während die ungeknickten Verbindungsplatinen zwar eine Form ergeben, die einen lückenhaften Zylindermantel näherungsweise ausbildet, stellen solche geknickten Verbindungsplatinen eine Zusammenfassung mehrerer der ungeknickten Verbindungsplatinen dar und vermindern somit die Lücken im Zylindermantel. Eine Verbindungsplatine mit einem Knick ist zweckmäßig für die Kontaktierung zweier nebeneinander liegender Leiterplatten. Eine Verbindungsplatine mit zwei Knicks ist zweckmäßig für die Kontaktierung dreier nebeneinander liegender Leiterplatten.

Die Verbindungsplatine kann eine flexible Leiterplatte sein. Flexible Leiterplatten können sich bei mechanischer Beanspruchung verformen. Leiterbahnen und andere elektronische Bauelemente auf solchen Leiterplatten behalten dabei ihre elektrische Funktion. Durch die Verwendung einer flexiblen Leiterplatte als Verbindungsplatine werden Aufbau und Installation vereinfacht, da die kreis- oder ringförmigen Strukturen nun keine fest definierten Abstände voneinander haben müssen und auch im installierten Zustand mit den Verbindungsplatinen zueinander verschoben werden können.

Der Elektromotor kann zweite Verbindungsplatinen umfassen. Jede zweite Verbindungsplatine ist dann an eine Mehrzahl der Verbindungsplatinen angesteckt. Jede der Verbindungsplatinen wiederum ist an eine einzelne zweite Verbindungsplatine angesteckt. Dabei umfassen die zweiten Verbindungsplatinen jeweils eine Kabelverbindung zur Steuerung. Hierdurch entfällt vorteilhaft die Notwendigkeit einer Kabelverbindung von jeder der Verbindungsplatinen zur Steuerung und die Anzahl der Kabelverbindungen wird verringert.

Die zweiten Verbindungsplatinen können beispielsweise ringsektorförmig oder kreissektorförmig ausgestaltet sein. Der Mittelpunktswinkel ist dabei so gewählt, dass wenigstens zwei der Verbindungsplatinen kontaktiert werden können. Es ist auch möglich, dass sie als im Wesentlichen rechteckige, aber geknickte Platinen ausgestaltet sind.

Die Stromleiter können so gestaltet sein, dass sie die Feldleiter axial verlängern. Die Stromleiter sind dabei ähnlich wie die Feldleiter des Elektromotors gestaltet, können aber beispielsweise eine abweichende Querschnittsform aufweisen. Beispielsweise können die Stromleiter einen runden Querschnitt haben, während die Feldleiter einen langgestreckt rechteckigen Querschnitt aufweisen. Es ist zweckmäßig, wenn die Stromleiter wenigstens denselben Strom tragen können wie die Feldleiter. Stromleiter und Feldleiter können über dafür ausgestaltete Schuhe verbunden sein, die eine mechanische und elektrische Verbindung gewährleisten.

Die Leiterplatten können auf wenigstens einer Kühlplatte angeordnet sein. Die Kühlplatte kann dabei beidseitig mit den Platinen belegt sein, um eine große Dichte der elektrischen Bauteile zu erreichen. Die Kühlplatte ist bevorzugt eine metallische im Wesentlichen kreis- oder ringförmige Platte. Die Kühlplatte kann dabei zur Entwärmung Wärmerohre aufweisen oder Kühlkanäle für eine Durchströmung mit Luft oder einem Fluid. Die Kühlplatte kann auch aus zwei ringförmigen parallel angeordneten Platten aufgebaut sein, die miteinander so verschraubt sind, dass ein Abstand zwischen ihnen verbleibt. Eine aktive Belüftung kann dann so angeordnet sein, dass Luft zwischen den Platten angesaugt wird.

Die Kühlplatte kann so angeordnet sein, dass die Feldleiter oder mit den Feldleitern elektrisch verbundene Stromleiter mit der Kühlplatte in mechanischer Wirkverbindung stehen. Beispielsweise können die Stromleiter oder Feldleiter als mechanischer Träger für die Kühlplatte ausgebildet sein. Dafür ist die Kühlplatte bevorzugt senkrecht zur Achse der elektrischen Maschine angeordnet. Auf diese Weise kann die Kühlplatte mit den Leiterplatten platzsparend an einem axialen Ende der elektrischen Maschine angeordnet werden.

Die Leiterplatten können kreis- oder ringsektorförmig ausgestaltet sein. Leiterplatten mit dieser Form lassen sich besonders gut zu einem Kreis oder Ring zusammensetzen und somit optimal an die Form der elektrischen Maschine angepasst an einem axialen Ende der Maschine anordnen, wobei gleichzeitig eine hohe Modularität erreicht wird.

Die Leistungsteile sind bevorzugt ausgestaltet zur Erzeugung einer Wechselspannung mit einer Amplitude von 200 V oder weniger, insbesondere 100 V oder weniger, insbesondere 50 V oder weniger. Dadurch wird erst ermöglicht, dass die Komponenten der Leistungselektronik, insbesondere die Leistungshalbleiterschalter in geringen Abständen im MillimeterBereich voneinander angeordnet werden können und somit eine erhebliche Zahl von Leistungshalbleiterschaltern auf verhältnismäßig geringem Raum angeordnet werden können. Dadurch ist es möglich, hohe Ströme bei nicht zu großem Platzbedarf bereitzustellen und gleichzeitig eine Vielzahl von Phasen, beispielsweise 6, 12, 24, 48, 72 oder sogar 120 Phasen zu erzeugen.

Im Folgenden wird die Erfindung anhand der in den Figuren dargestellten Ausführungsbeispiele näher beschrieben und erläutert. Es zeigen schematisch:
Figur 1 einen Elektromotor mit auf von Kühlplatten getragenen Leiterplatten angeordneten Leistungsteilen in Schrägansicht,
Figur 2 auf einer Kühlplatte angeordnete Platinen in Frontansicht,
Figur 3 einen Ausschnitt des Elektromotors in Schrägansicht mit Kühlplatten mit Leiterplatten,
Figur 4 einen Ausschnitt des Elektromotors mit Kühlplatten mit Platinen und über Federkontakte angesteckten Verbindungsplatinen in Seitenansicht,
Figur 5 eine Frontansicht des Elektromotors mit Kühlplatten mit Platinen und Verbindungsplatinen,
Figur 6 ein zweites Schema für die Federkontakte als Verbindung zwischen Verbindungsplatinen und Platinen,
Figur 7 einen Aufbau mit Gate-Treiber-Schaltungen auf Treiber-Platinen,
Figur 8 eine erste Ausführungsform für die Verbindungsplatinen,
Figur 9 eine zweite Ausführungsform für die Verbindungsplatinen,
Figur 10 eine dritte Ausführungsform für die Verbindungsplatinen mit Gate-Treiber-Schaltungen,
Figur 11 einen Aufbau mit zusätzlichen zweiten Verbindingsplatinen.

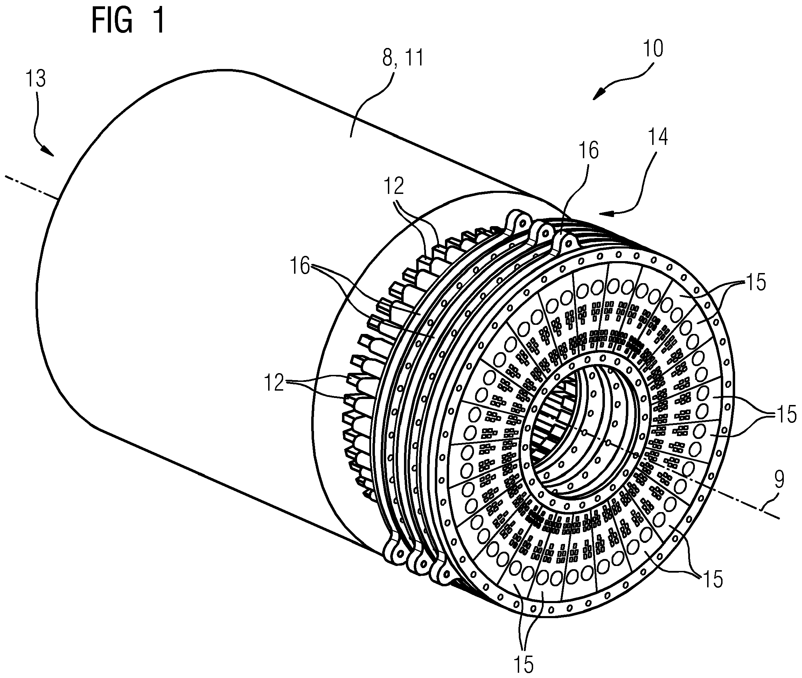

Figur 1 stellt eine isometrische Ansicht eines Elektromotors 10 dar, der ein Ausführungsbeispiel für die Erfindung ist. Der Elektromotor 10 umfasst einen Stator 11 und einen im Wesentlichen im Stator 11 angeordneten Rotor, der in Figur 1 nicht sichtbar ist. Der Rotor ist drehfest mit einer Welle verbunden, die ebenfalls in Figur 1 nicht dargestellt ist. Durch elektromagnetische Wechselwirkung des Rotors mit einem dem bestromten Stator 11 wird der Rotor um eine Achse 9 in Drehung versetzt. Der Rotor ist dabei vom Stator 11 durch einen Luftspalt getrennt. In anderen Ausführungsformen kann es sich bei dem Elektromotor 10 auch um einen Außenläufermotor oder Glockenankermotor handeln.

Der Stator 11 umfasst als Feldleiter eine Mehrzahl von starren und geraden Leiterstäben 12. Diese Leiterstäbe 12 sind auf der in Figur 1 abgewandten Stirnseite 13 über einen Kurzschlussring miteinander verbunden. Auf der Rückseite 14 des Elektromotors 10 werden die Leiterstäbe 12 durch jeweils zugehörige Wechselrichtermodule einzeln gespeist. Da es sich bedingt durch die Leiterstäbe 12 um einen bei niedrigen Spannungen betriebenen Elektromotor 10 handelt, können die Wechselrichtermodule sind zusammen mit anderen Komponenten der Elektronik (Gleichspannungswandler, Gleichrichter) verhältnismäßig eng zusammen auf Leiterplatten 15 angeordnet sein. Die Leiterplatten 15 sind dabei in diesem Beispiel ringsektorförmig und viele einzelne Leiterplatten 15 bilden zusammen eine ringförmige Platinenstruktur aus.

Während in den Beispielen davon ausgegangen wird, dass die Leiterplatten 15 zumindest die Leistungsteile von Wechselrichtern tragen, ist es auch möglich, dass ein Teil der Leiterplatten 15 Gleichrichter und DC/DC-Wandler tragen.

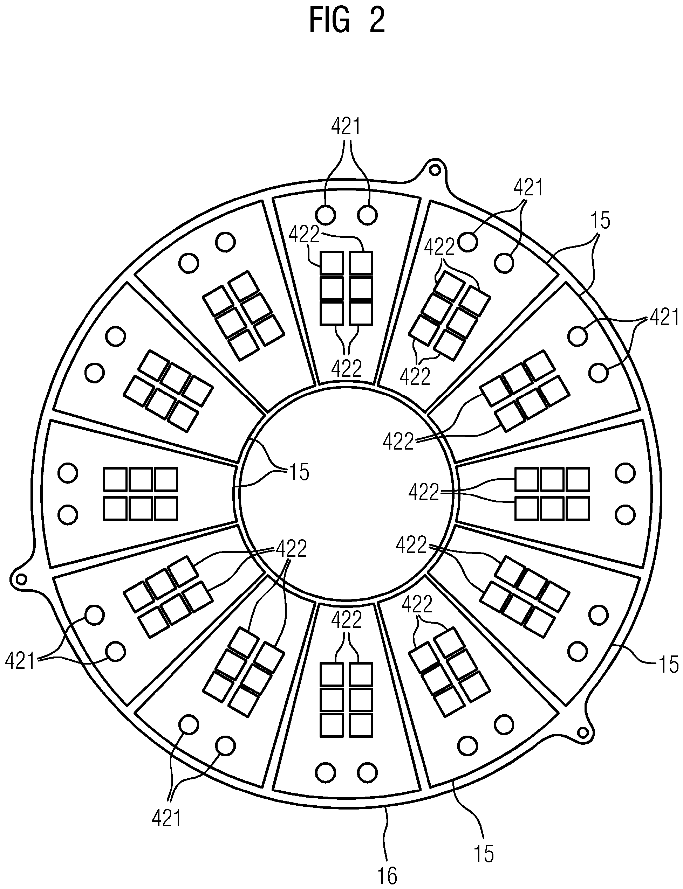

Figur 2 zeigt eine Aufsicht auf eine solche Platinenstruktur. Die Anzahl der in Figur 2 dargestellten Platinen ist dabei für eine bessere Übersichtlichkeit gegenüber dar Darstellung in Figur 1 verringert und stark vereinfacht dargestellt. Die konkrete Anzahl an solchen Leiterplatten 15 hängt von der konkreten Ausgestaltung des Elektromotors 10 ab, insbesondere der Anzahl der Leiterstäbe 12. Jede der Leiterplatten 15 umfasst mehrere Halbleiterschalter 422. Die Halbleiterschalter 422 bilden zusammen Leistungsteile von Wechselrichtern aus, die eine Wechselspannung für die Leiterstäbe 12 bereitstellen.

Weiterhin kann ein Teil der Leiterplatten 15 oder alle Leiterplatten 15 in den Figuren nicht dargestellte Treiberschaltungen und andere elektronische Komponenten wie Kondensatoren umfassen. Die Halbleiterschalter 422 sind Leistungshalbleiter wie beispielsweise IGBTs, MOSFETs oder JFETs und können abhängig von der Verschaltung zusätzlich nicht gezeigte Dioden umfassen. Die Halbleiterschalter 422 sind beispielsweise als Halbbrücken verschaltet. Ein nicht gezeigter Kondensator kann beispielsweise einen Zwischenkreis-Kondensator der Halbbrücken darstellen. Die Halbleiterschalter 422 einer Leiterplatte 15 können dabei einer einzelnen Phase zugeordnet sein. Bei einem Elektromotor 10 mit einer großen Zahl an Feldleitern 12 und einer entsprechenden Zahl an Phasen ist es vorteilhaft, wenn eine Leiterplatte 15 die Leistungsteile für mehrere Phasen trägt.

Die Leiterplatten 15 umfassen weiterhin Kontaktstellen 421, an denen die Leiterstäbe 12 angeschlossen sind. Die Leiterplatten 15 werden von scheibenförmigen Kühlplatten 16 getragen, wobei für eine bessere Platzausnutzung die Kühlplatten 16 beidseitig mit Leiterplatten 15 belegt sein können.

Da bei dem Elektromotor 10 verhältnismäßig hohe Ströme in den Leiterstäben nötig sind, sind bevorzugt mehrere Leistungsteile zu deren Bestromung parallelgeschaltet. Dies kann beispielsweise dadurch erreicht werden, dass die in Figur 1 gezeigten sechs Platinenstrukturen auf drei Kühlplatten 16 alle gleichartig an die Leiterstäbe 12 angeschlossen sind und somit elektrisch parallel angebunden sind. Dabei wird ausgenutzt, dass die Leiterstäbe 12 oder Verbindungselemente 18 zu den Leiterstäben 12 die Kühlplatten 16 und damit auch die Leiterplatten 15 gleichartig an den Kontaktstellen durchdringen oder im Falle der äußersten Kühlplatte 16 zumindest kontaktieren.

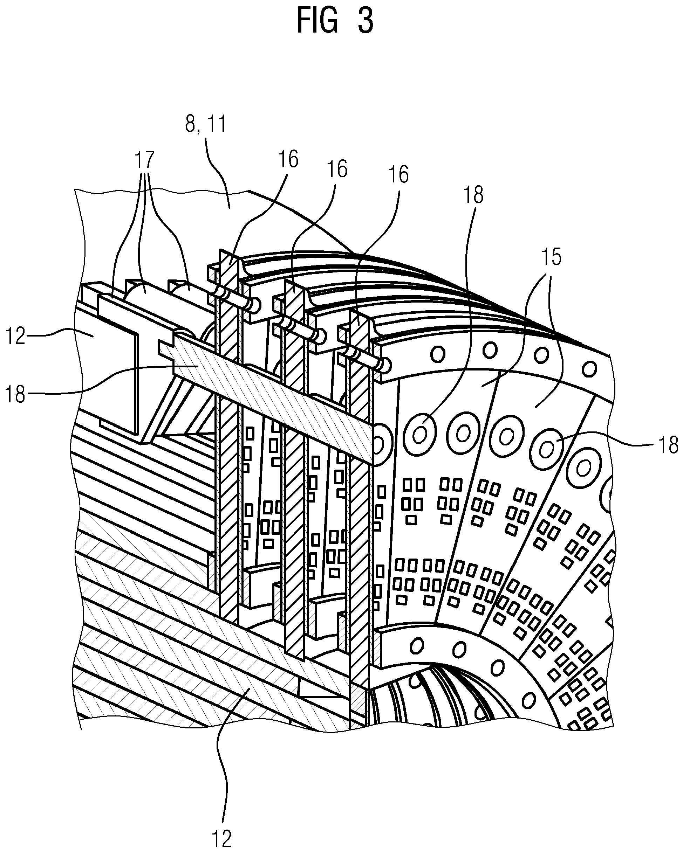

Figur 3 zeigt ein Schnittbild des Elektromotors 10 in Schrägansicht. Hierbei ist zu erkennen, dass die Verbindungselemente 18 die drei Kühlplatten 16 mechanisch tragen und durchdringen. Die Verbindungselemente 18 sind über Schuhe 17 mit den Leiterstäben 12 verbunden. Die Endstufen, die auf den Leiterplatten 15 in den Bereichen liegen, in denen eines der Verbindungselemente 18 eine Kühlplatte 16 durchdringt, sind parallelgeschaltet und stellen gemeinsam den Strom für den Leiterstab 12 bereit. Bei dem in Figur 3 gezeigten Aufbau ist erkennbar, dass zwei der Verbindungselemente 18 jeweils eine Platine 15 durchlaufen. Somit trägt jeder der Platinen die Endstufen für zwei Phasen des Elektromotors 10. In anderen Varianten für den Elektromotor 10 kann eine einzelne Leiterplatte 15 auch nur eine Phase oder drei oder mehr Phasen tragen, wobei dieselbe Anzahl der Verbindungselemente 18 die Leiterplatte 15 durchläuft.

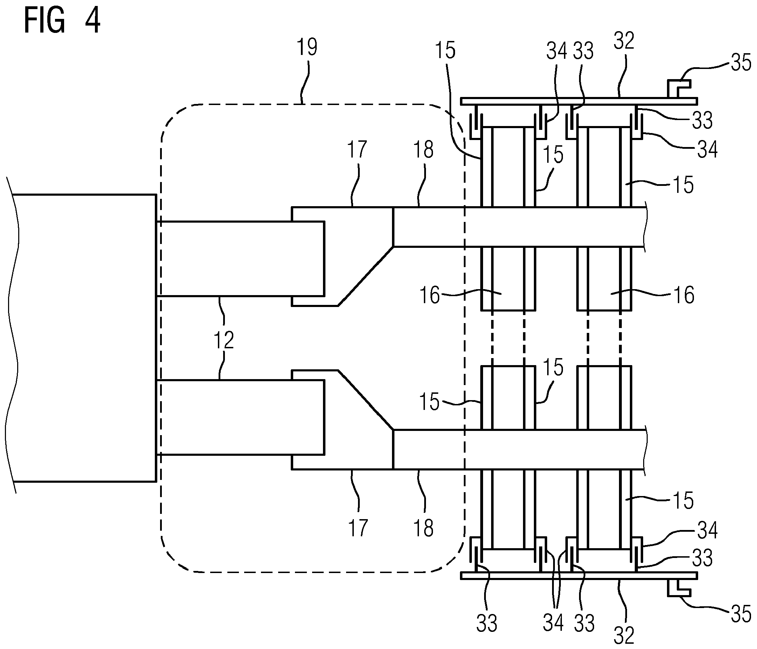

Figur 4 zeigt eine Seitenansicht eines Ausschnitts des Elektromotors 10. Gezeigt sind in Figur 4 acht Leiterplatten 15, die auf zwei Kühlplatten 16 angeordnet sind. Weiterhin zeigt Figur 4 zwei Verbindungsplatinen 32, die jeweils vier der Leiterplatten 15 verbinden. Die Verbindungsplatinen 32 erstrecken sich axial und sind mittels Federkontakten 33 mit Buchsen 34 einer jeweiligen Leiterplatte 15 verbunden. Jede der Verbindungsplatinen 32 weist weiterhin eine Buchse 35 für eine Kabelverbindung mit einer Steuerplatine 31 auf.

Die Anordnung in Figur 4 entspricht denjenigen der Figuren 1 bis 3. Von den vier Ringstrukturen, die die Leiterplatten 15 bilden, erfasst das Schnittbild der Figur 4 daher acht der Leiterplatten 15. Ebenso erfasst das Schnittbild nur die zwei Verbindungsplatinen 32, die an diese acht Leiterplatten 15 angesteckt sind. Neben den in Figur 4 gezeigten zwei Verbindungsplatinen 32 umfasst der Elektromotor 10 aber weitere nicht gezeigte Verbindungsplatinen 32. Diese sind an die nicht gezeigten Leiterplatten 15 angesteckt und umgeben so den gezeigten Aufbau und bilden - geometrisch stark vereinfacht betrachtet - die Form eines losen Zylindermantels aus.

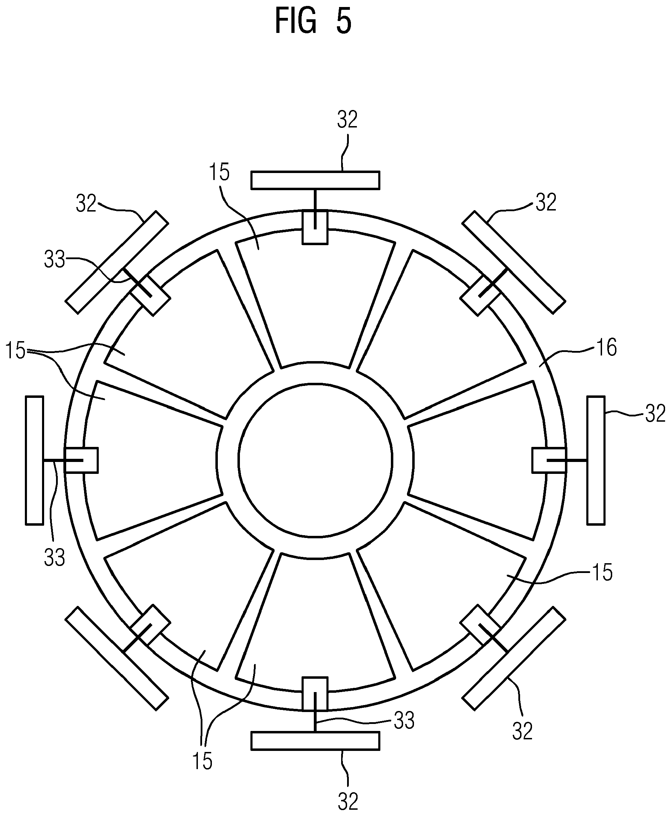

Figur 5 zeigt denselben Aufbau stark vereinfacht in einer Frontansicht. In Figur 5 ist erkennbar, dass die Leiterplatten 15 eine Ringstruktur ausbilden. Für jede der Leiterplatten 15 ist eine Verbindungsplatine 32 vorhanden, die per Federkontakt 33 und Buchse 34 mit einer jeweiligen Leiterplatte 15 verbunden ist. Gemäß Figur 5 sind acht Leiterplatten 15 auf der Vorderseite der Kühlplatte 16 angeordnet, bei beidseitiger Belegung der Kühlplatten 16 und Verwendung von zwei Kühlplatten wie in Figur 4 gezeigt, umfasst der Elektromotor 10 also 32 Leiterplatten 15, die mittels acht Verbindungsplatinen 32 mit einer Steuerplatine 31 verbunden sind.

Dabei spielt für die Anzahl der Verbindungsplatinen 32 die Anzahl der Phasen und damit Stromstäbe 12 nicht notwendigerweise eine Rolle. Figur 5 zeigt nicht, wie viele Phasen und damit Stromstäbe 12 der Elektromotor 10 aufweist. Pro Leiterplatte 15 kann eine Phase, zwei, drei oder mehr Phasen angesteuert werden. Dieselbe Anzahl an Stromstäben 12 oder Verbindungsleitern 18 mündet dann in jeder der Leiterplatten 15. Die Verbindungsplatinen 32 sind aber an die Anzahl der anzusteuernden Phasen angepasst, da eine entsprechende Anzahl Signalleitungen vorhanden sein muss.

Die Figuren zeigen vereinfachend einzelne Federkontakte 33 und Buchsen 34. In jedem Fall können damit aber jeweils auch mehrere tatsächliche Signalleitungen gemeint sein. Die Buchsen 34 können also tatsächlich Buchsenleisten sein und die Federkontakte 33 entsprechende Steckerleisten.

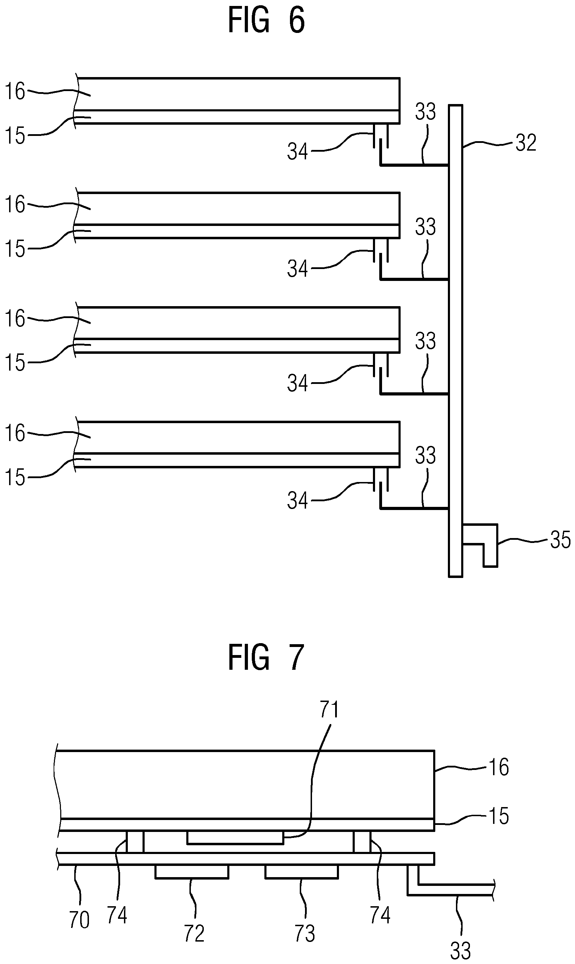

Figur 6 zeigt eine alternative Ausgestaltung der Federkontakte 33 und Buchsen 34, die geeignet ist für einen Elektromotor 10, bei dem die Kühlplatten 16 lediglich einseitig mit Leiterplatten 15 belegt sind. Der Übersichtlichkeit halber ist Figur 6 stark vereinfacht. In diesem Fall können die Buchsen 34 anstelle einer radialen Ausrichtung eine axiale Ausrichtung aufweisen. Das Einstecken der Verbindungsplatinen 32 erfolgt in diesem Beispiel durch Bewegung in axialer Richtung anstelle der radialen Richtung.

Auch andere Ausrichtungen der Steckverbindern, beispielsweise eine tangentiale Ausrichtung sind möglich.

In einer weiteren Variante für den Aufbau des Elektromotors 10, die in den Figuren nicht gezeigt ist, ist die Steuerungsplatine 31 konzentrisch mit den Kühlplatten und axial verschoben zu ihnen angeordnet und hat denselben Außenradius wie die Leiterplatten 15. In dieser Ausführungsmöglichkeit werden die Verbindungsplatinen 32 auch auf die Steuerungsplatine 31 aufgesteckt und stellt darüber Signalverbindungen her. Eine Kabelverbindung zwischen den Verbindungsplatinen 32 und der Steuerungsplatine 31 entfällt daher.

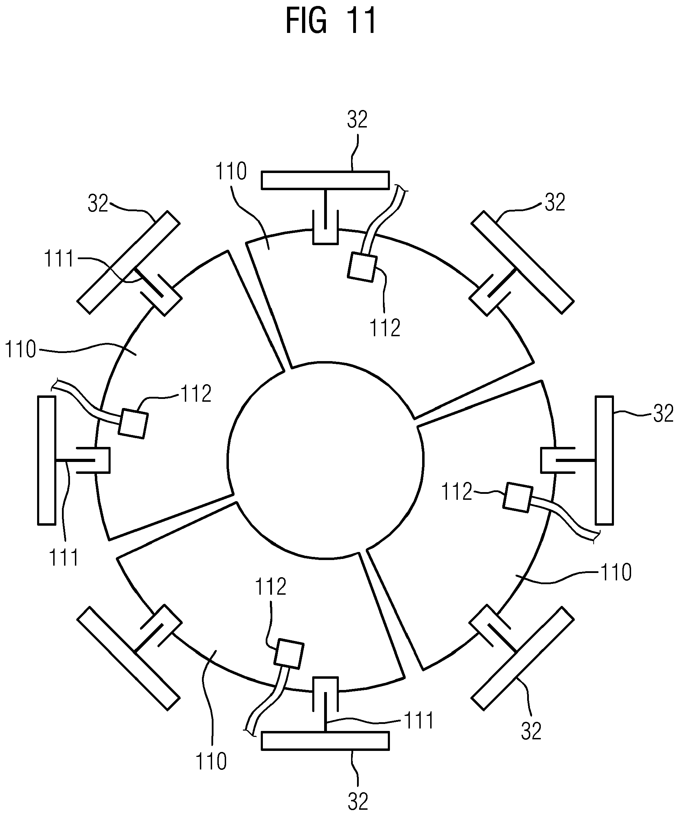

Bei einer weiteren Variante für den Aufbau des Elektromotors 10, die in Figur 11 gezeigt ist, sind jeweils mehrere der Verbindungsplatinen 32 an eine zweite Verbindungsplatine 110 angesteckt. Die zweite Verbindungsplatine 110 kann dazu beispielsweise ringsektorförmig gestaltet sein. Es ist zweckmäßig, wenn dazu die Verbindungsplatinen 32 so gestaltet sind, dass sie über die am weitesten vom Stator/Rotor-Block 8 entfernte Kühlplatte 16 hinausragen und zu ihrem Ende hin einen weiteren Steckverbinder 111 aufweisen. Dieser weitere Steckverbinder 111 kann axial ausgerichtet sein oder radial. Dem entsprechend sind dann die zweiten Verbindungsplatinen 110 an die Stirnseite oder an die Innenseite oder Außenseite der Verbindungsplatinen 32 angesteckt.

Die zweiten Verbindungsplatinen 110 sind dabei so gestaltet, dass sie an mehrere der Verbindungsplatinen 32 angesteckt sind. In dem Beispiel der Figur 11 weisen die zweiten Verbindungsplatinen 110 einen Mittelpunktswinkel von ca. 90° auf, sind also in etwa Viertelringe. Bei großen Elektromotoren 10 mit beispielsweise 72 Phasen oder 120 Phasen kann der Radius der Ringe im Meterbereich liegen und es kann zweckmäßig sein, auch hier nur zwei, drei oder vier der Verbindungsplatinen 32 anzustecken. In diesem Fall beträgt der Mittelpunktswinkel für jede der zweiten Verbindungsplatinen 110 dann beispielsweise nur 9° und es sind drei Verbindungsplatinen 32 an jede der zweiten Verbindungsplatinen 110 angesteckt. In diesem Fall umfasst der Elektromotor 10 dann 40 der zweiten Verbindungsplatinen 110.

Die zweiten Verbindungsplatinen 110 umfassen eine Verbindung zur Steuerung, beispielsweise als LAN-Verbindung, USB-Verbindung oder optische Verbindung über eine Buchse 112 auf den zweiten Verbindungsplatinen. Die Verbindung von den Verbindungsplatinen 32 zur Steuerung, also die Buchse 35 auf den Verbindungsplatinen 32, kann dadurch entfallen. Elektrisch gesehen fassen also die zweiten Verbindungsplatinen 110 die Verbindungsplatinen 32 noch einmal zusammen und verringern die Anzahl der nötigen Kabelverbindungen zur Steuerung.

Ein Elektromotor 10 kann beispielsweise drei doppelseitig belegte Kühlplatten 16 mit zwölf Leiterplatten 15 pro Seite aufweisen, also 72 Leiterplatten 15. Die Leiterplattem 15 sind axial durch zwölf Verbindungsplatinen 32 verbunden, die an jeweils sechs azimutal gleichliegende Leiterplatten 15 angesteckt sind. Vier ringsektorförmige zweite Verbindungsplatinen 110 sind dann an je drei der Verbindungsplatinen 32 angesteckt. Jede der zweiten Verbindungsplatinen 110 ist somit direkt, also kabelfrei, mit 18 Leiterplatten 15 verbunden und die Anzahl an Kabelverbindungen zur Steuerung sinkt auf vier, eine pro zweiter Verbindungsplatine 110.

Neben den in Figur 11 gezeigten Elementen umfassen die zweiten Verbindungsplatinen 110 wenigstens einen Multiplexer 93 zur Verteilung der Signale und passende Leitungsverbindungen zwischen der Buchse 35, dem Multiplexer 93 und den Steckverbindern 111.

In allen gegebenen Beispielen wurde davon ausgegangen, dass die Verbindungsplatinen 32 radial außenliegend auf die Leiterplatten 15 aufgesteckt werden. Es ist jedoch alternativ oder zusätzlich auch möglich, die Verbindungsplatinen 32 innenliegend aufzustecken. Mit anderen Worten werden die Verbindungsplatinen 32 dafür an den ringförmigen Strukturen, die durch die Leiterplatten 15 gebildet werden, am inneren Rand, also den zum Innenradius des Rings gehörigen Rand angeordnet.

Neben der Möglichkeit, die Verbindungsplatinen 32 direkt an denjenigen Leiterplatten 15 anzustecken, die die Endstufen tragen, gibt es auch eine weitere Ausführungsform, die in Figur 7 dargestellt ist. Die auf einer Kühlplatte 16 angeordnete Leiterplatte 15 trägt dabei eine Endstufe des Wechselrichters, vereinfachend als ein Leistungshalbleiterschalter 71 dargestellt. Eine Treiber-Platine 70 trägt die Gate-Treiber-Schaltung 72 und einen lokalen Steuerchip 73. Steckverbinder 74 übertragen die Signale zwischen der Leiterplatte 15 und der Treiber-Platine 70. Der Federkontakt 33 ist in dieser Ausführungsform an der Treiber-Platine 70 angeordnet. Die Verbindungsplatine 32 wird also in dieser Ausführungsform an der Treiber-Platine 70 angesteckt.

Die voranstehend beschriebenen Ausführungsmöglichkeiten für die Anordnung der Verbindungsplatinen 32 an den Leiterplatten 15 können mit verschiedenen Ausführungsformen für die Verbindungsplatinen 32 selbst kombiniert werden, die im Folgenden anhand von Beispielen dargestellt werden.

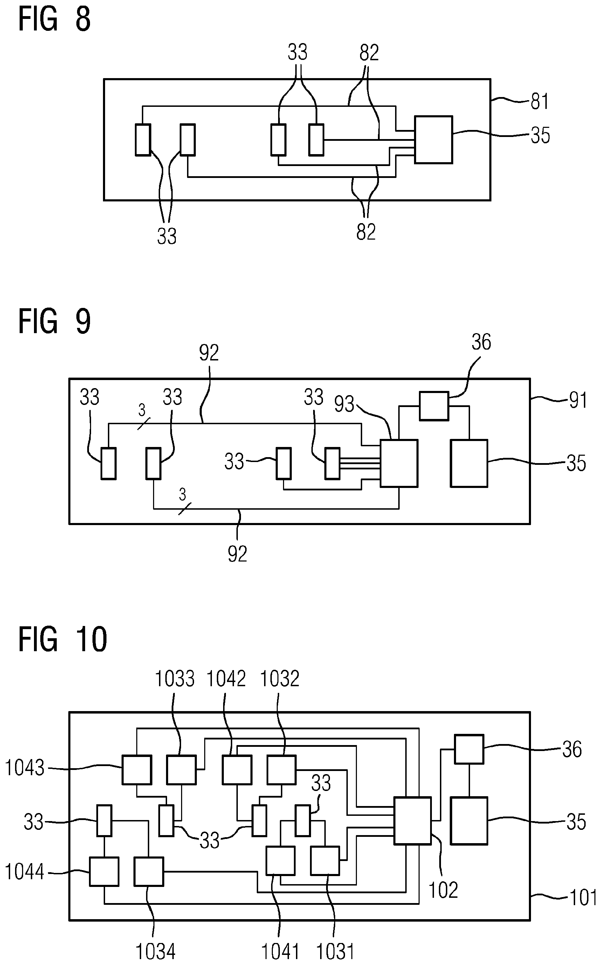

Eine erste beispielhafte Verbindungsplatine 81 ist in Figur 8 genauer dargestellt. Die Verbindungsplatine 81 ist rechteckig, wobei sich die lange Seite im verbauten Zustand axial erstreckt wie in den voranstehend beschriebenen Figuren gezeigt. Die Verbindungsplatine 81 umfasst in dieser ersten Variante lediglich vier Signalleitungen 82.

Diese münden an einem ersten Ende in der Buchse 35. Die Buchse 35 ist für die Verbindung mit der Steuerungsplatine 31 vorgesehen. Sie kann die Signalleitungen parallel herausführen, beispielsweise als eine Buchsenleiste für einen direkten Platinen-Steckverbinder oder als Buchse für ein paralleles Schnittstellenkabel. Eine weitere Möglichkeit besteht darin, dass die Buchse 35 eine USB- oder LAN-(RJ45)-Buchse ist. In diesem Fall umfasst die Verbindungsplatine 81 auch in Figur 8 nicht gezeigte elektronische Bauteile für die Ansteuerung der Buchse 35.

In dieser Ausführungsform ist die Verbindungsplatine 81 also für den Transport der Signale zuständig. Das setzt voraus, dass die Gate-Treiber-Schaltungen für die Leistungshalbleiterschalter mit diesen zusammen auf den Leiterplatten 15 angeordnet sind oder auf eigenen Treiber-Platinen angeordnet sind, die beispielsweise auf die Leiterplatten 15 so aufgesteckt werden, dass sie diese teilweise überdecken (Sandwichartig gestapelte Platinen). Die Steuersignale für die Gate-Treiber-Schaltungen werden von der Verbindungsplatine 81 durchgeleitet. Weiterhin wird vorausgesetzt, dass vier Leiterplatten 15, die axial an derselben Stelle liegen, aber vorder- und rückseitig an den beiden Kühlplatten 16 angeordnet sind, jeweils nur eine Phase ansteuern und auch nur ein Steuersignal für Gate-Treiber-Schaltungen benötigen.

Verbindungsplatine 81 wie auch die weiteren gezeigten Ausführungsformen können neben den gezeigten Elementen auch noch weitere Schaltkreise aufweisen wie beispielsweise Überwachungs-, Ansteuer-, Verstärker/Pufferschaltungen oder Kommunikationsschnittstellen.

Eine komplexere Verbindungsplatine 91 ist in Figur 9 dargestellt. Bei der Buchse 35 handelt es sich in diesem Beispiel um einen LAN-Anschluss mit einem Steuerchip 36. Die darüber ankommenden Steuersignale werden durch einen Multiplexer 93 auf eine Mehrzahl von Signalleitungen 92 aufgeteilt. In der Figur 9 sind pro Federkontakt 33 drei Signalleitungen 92 gezeigt, in realen Ausführungen kann es sich aber um wesentlich mehr, beispielsweise 10 oder sogar 30 Signalleitungen 92 handeln, die zu jeder der angesteckten Leiterplatten 15 führen.

Auch bei dieser Ausführungsform der Verbindungsplatine 91 befinden sich also die Gate-Treiber-Schaltungen für die Leistungshalbleiterschalter mit diesen zusammen auf den Leiterplatten 15 oder auf eigenen Treiber-Platinen. Die Steuersignale für die Gate-Treiber-Schaltungen werden von der Verbindungsplatine 91 durchgeleitet.

Es ist auch möglich, die Gate-Treiber-Schaltungen für die Leistungshalbleiterschalter auf den Verbindungsplatinen anzuordnen. Eine beispielhafte Verbindungsplatine 101 wie in Figur 10 gezeigt mit Gate-Treiber-Schaltungen ist in Figur 10 gezeigt. Bei der Buchse 35 handelt es sich wieder um einen LAN-Anschluss mit einem Steuerchip 36. Die darüber ankommenden Steuersignale werden durch einen Multiplexer 93 auf eine Mehrzahl von Signalleitungen aufgeteilt. Die Signalleitungen führen dabei zu je einer Gate-Treiber-Schaltung 1031...1034 und je einem lokalen Steuerchip 1041...1044. Die Gate-Treiber-Schaltungen 1031...1034 und die lokalen Steuerchips 1041...1044 sind dabei jeweils einem Federkontakt 33 zugeordnet und darüber mit einer Leiterplatte 15 verbunden.

Mit der Verbindungsplatine 101 können im Prinzip die angebundenen Leiterplatten 15 völlig separat angesteuert werden. Es muss also auch kein Zusammenhang zwischen azimutal gleichliegenden Leiterplatten 15 bestehen. Bei dem hier gezeigten Elektromotor 10 steuern aber azimutal gleichliegende Leiterplatten 15 stets dieselbe Phase oder dieselben Phasen an. Für den hier dargestellten Elektromotor 10 ist es daher zweckmäßig, mit der gezeigten Verbindungsplatine 101 eine einzelne Phase des Elektromotors 10 anzusteuern, die mehrere parallelgeschaltete Endstufen auf denjenigen Leiterplatten 15 umfasst, die über die Verbindungsplatine 101 angeschlossen sind.

In Fällen, in denen eine Leiterplatte 15 die Endstufen für mehrere Phasen des Elektromotors 10 trägt, ist es zweckmäßig, wenn eine Verbindungsplatine nach Art der in Figur 10 gezeigten Verbindungsplatine 101 eine entsprechende Anzahl der Gate-Treiber-Schaltungen 1031...1034 und lokalen Steuerchips 1041...1044 tragen und deren Signale über den Federkontakt 33 an die Leiterplatte 15 übertragen.

Da die Verbindungsplatine 101 gemäß Figur 10 bereits Gate-Treiber-Schaltungen trägt, ist eine Kombination mit einer Ausführung gemäß der Figur 7 nicht zweckmäßig. Es ist aber möglich, die nötige Anzahl an Gate-Treiber-Schaltungen zwischen der Verbindungsplatine 101 und einer Treiber-Platine 70 gemäß Figur 7 aufzuteilen. Gegenüber den Treiber-Platinen 70, die parallel zu den Leiterplatten 15 angeordnet sind, hat die Verbindungsplatine 101 den Vorteil, dass sie die Verbindung zur Steuerung mit einer einzelnen Kabelverbindung für alle azimutal gleichliegenden Leiterplatten 15 ermöglicht.

### Bezugszeichen

- 9: Motorachse
- 10: Elektromotor
- 11: Stator
- 12: Leiterstäbe
- 13: Stirnseite
- 14: Rückseite
- 15: Platine
- 16: Kühlplatte
- 17: Schuh
- 18: Verbindungselement
- 32, 81, 91, 101: Verbindungsplatine
- 33: Federkontakt
- 34, 35: Buchse
- 36: Steuerchip
- 70: Treiber-Platine
- 71: Leistungshalbleiterchip
- 72: Gate-Treiber-Schaltung
- 73: lokaler Steuerchip
- 82, 92: Signalleitung
- 93: Multiplexer
- 1031...1034: Gate-Treiber-Schaltung
- 1041...1044: lokaler Steuerchip
- 110: zweite Verbindungsplatine
- 421: Kontaktstellen
- 422: Halbleiterschalter

## Patentansprüche

1. Elektromotor (10) mit:
- einem Stator (11) mit einer Mehrzahl von als Stab ausgestalteten Feldleitern (12),
- einem Wechselrichter mit einem oder mehreren parallelen Leistungsteilen für jeden der Feldleiter (12) zu deren Ansteuerung, wobei der Wechselrichter eine Steuerung zur Erzeugung von Ansteuersignalen für die Leistungsteile umfasst, wobei
- die Endstufen des Wechselrichters auf einer Mehrzahl von Leiterplatten (15) angeordnet sind,
- die Leiterplatten (15) so angeordnet sind, dass sie wenigstens zwei kreis- oder ringförmige Strukturen ausbilden,
- die kreis- oder ringförmigen Strukturen parallel zueinander und axial versetzt zueinander angeordnet sind, sodass ihre Mittelpunkte auf einer gemeinsamen Zentral-Achse liegen,
- an jeder der Leiterplatten (15) ein oder mehrere Steckverbinder (33) angeordnet sind zur Kontaktierung der Endstufen,
- eine Verbindungsplatine (32, 81, 91, 101) an bezüglich der Zentral-Achse azimutal gleichliegende Steckverbinder (33) von Leiterplatten (15) verschiedener kreis- oder ringförmiger Strukturen angesteckt ist.

2. Elektromotor (10) nach Anspruch 1, bei dem die Achse der kreis- oder ringförmigen Strukturen der Motorachse (9) entspricht.

3. Elektromotor (10) nach Anspruch 1, bei dem die kreis- oder ringförmigen Strukturen denselben Durchmesser aufweisen.

4. Elektromotor (10) nach Anspruch 1, bei dem sich die Verbindungsplatinen (32, 81, 91, 101) in axialer Richtung parallel zur Motorachse (9) erstrecken.

5. Elektromotor (10) nach Anspruch 1, bei dem die Anzahl der Verbindungsplatinen (32, 81, 91, 101) der Anzahl der Feldleiter (12) entspricht.

6. Elektromotor (10) nach Anspruch 1, bei dem die Verbindungsplatine (32, 81, 91, 101) Gate-Treiber-Schaltungen (72) für die Leistungsteile umfasst.

7. Elektromotor (10) nach Anspruch 1, bei dem die Verbindungsplatine (32, 81, 91, 101) einen Multiplexer (93) umfasst und ausgestaltet ist, von der Steuerung eingehende Steuersignale so auf eine von mehreren Signalleitungen zu leiten, dass sie denjenigen Leistungsteilen zugeleitet werden, an die sie adressiert sind.

8. Elektromotor (10) nach Anspruch 1, bei dem die Verbindungsplatine (32, 81, 91, 101) eine oder mehrere Verschraubungen mit einer oder mehreren der kreis- oder ringförmigen Strukturen umfasst.

9. Elektromotor (10) nach Anspruch 1, bei dem die Verbindungsplatine (32, 81, 91, 101) eine flexible Leiterplatte ist.

10. Elektromotor (10) nach Anspruch 1, bei dem Stromleiter (18) die Feldleiter (12) axial verlängern.

11. Elektromotor (10) nach Anspruch 1, bei dem die Leiterplatten (15) auf wenigstens einer Kühlplatte (16) angeordnet sind.

12. Elektromotor (10) nach Anspruch 1, bei dem die Kühlplatte (16) so angeordnet ist, dass die Feldleiter (12) oder mit den Feldleitern (12) elektrisch verbundene Stromleiter (18) mit der Kühlplatte (16) in mechanischer Wirkverbindung stehen, insbesondere als mechanischer Träger für die Kühlplatte (16) ausgebildet sind.

13. Elektromotor (10) nach Anspruch 1, bei dem die Leiterplatten (15) kreis- oder ringsektorförmig ausgestaltet sind.

14. Elektromotor (10) nach Anspruch 1, ausgestaltet, die Feldleiter (12) mit wenigstens 6 Phasen anzusteuern.

15. Elektromotor (10) nach Anspruch 1, bei dem die Wechselrichter ausgestaltet sind zur Erzeugung einer Wechselspannung mit einer Amplitude von 200 V oder weniger, insbesondere 100 V oder weniger, insbesondere 50 V oder weniger.
